# DEMANDE DE BREVET EUROPEEN

(11) **EP 3 629 170 A1**
(43) Date de publication de la demande: **01.04.2020**
(21) Numéro de dépôt: 19197920.2
(22) Date de dépôt: 18.09.2019
(51) Int. Cl.: G06F 9/52, G06F 13/372

(54) **SYSTÈME ET PROCÉDÉ D'ACCÈS À UNE RESSOURCE PARTAGÉE**

(30) Priorité: 27.09.2018 FR 1801004
(71) Demandeur: Thales, 92400 Courbevoie (FR)
(72) Inventeur: LAMOUR, Pierrick, 33700 Merignac (FR); FINE, Alexandre, 33700 Merignac (FR)
(74) Mandataire: Lavoix

(57) **Abrégé**

L'invention concerne un système d'accès à une ressource partagée appartenant à une plateforme matérielle (2) comprenant une pluralité d'unités de traitement maîtres (4₁,...,4ₙ), chaque unité de traitement maître (4₁,...,4ₙ) étant apte à exploiter une ressource partagée (10₁,...,10ₘ) lors d'une exécution d'un processus, chaque ressource partagée ayant une bande passante maximale associée. Pour au moins une ressource (10₁) partagée, le système comporte un compteur (20₁,...,20ₙ) d'un nombre de transferts de données entre ladite unité de traitement maître (4₁,...,4ₙ) et ladite ressource partagée (10₁), un comparateur (24₁,...,24ₙ) adapté à comparer le nombre de transferts à une limite de bande passante, fraction de ladite bande passante maximale, associée à ladite ressource partagée, et une unité de cadencement (22) adaptée à remettre à zéro chaque compteur après écoulement d'une période temporelle de durée prédéterminée. Le système d'accès est adapté à commander, dès que ledit nombre de transferts associé à une unité de traitement maître atteint ladite limite de bande passante, une suspension de l'exploitation de ladite ressource partagée par ladite unité de traitement maître, et une reprise de l'exploitation dès la remise à zéro de chaque compteur.

## Description

La présente invention concerne un système et un procédé d'accès à une ressource partagée appartenant à une plateforme matérielle comprenant une pluralité d'unités de traitement maîtres.

L'invention se situe dans le domaine de l'exploitation des ressources matérielles partagées, et trouve des applications dans divers domaines industriels dans lesquels la sûreté de fonctionnement est critique. Par exemple, il s'agit des domaines de l'automobile, de l'aéronautique, du nucléaire, des serveurs de sécurité.

Dans les dernières années, l'utilisation de plateformes matérielles, par exemple des processeurs multi-maitres (ou « multi-masters » en anglais), s'est développée notamment dans l'électronique grand public, pour des smartphones, tablettes, ordinateurs. Ce type de plateforme fournit une puissance de calcul bien supérieure à celle des plateformes à une seule unité de traitement maître ou mono-master.

Cependant, dans des domaines d'application où la sûreté de fonctionnement est critique, de telles plateformes matérielles multi-maîtres sont difficilement utilisables, l'accès à des ressources matérielles partagées par une pluralité d'unités de traitement ou processus maîtres pouvant induire des conflits entre accès concurrents, et par conséquent des durées d'exécution d'un processus non maîtrisées. Or justement, dans certaines applications, par exemple dans un système de pilotage d'aéronef, il est critique d'assurer l'exécution d'un processus, par exemple d'une commande de pilotage dans un temps donné.

Les unités de traitement maîtres sont des unités capables d'exploiter une ressource dite esclave, par exemple de transférer des données binaires et/ou d'interroger une ressource esclave. Une unité de traitement maître est par exemple une unité coeur d'un processeur de calcul (ou CPU pour « central processing unit »), ou une unité coeur d'un processeur graphique (ou GPU pour « graphics processing unit ») ou une mémoire à accès direct ou DMA (pour « direct memory access »). Les ressources esclaves associées aux unités maîtres peuvent être partagées, par exemple la mémoire vive (ou RAM) ou un bus de type PCI express ®.

Les unités de traitement maîtres et les ressources sont connectées via un ou plusieurs bus de communication, chaque bus de communication ayant une largeur de bande associée, la largeur de bande désignant le nombre de bits ou d'octets qui peuvent transiter en même temps sur le bus de communication.

L'accès à une ressource via un bus de communication est caractérisé par une bande passante, exprimée en quantité de données par unité de temps, par exemple en octets par seconde, exprimant la quantité maximale de données qui peuvent être transmises et traitées par cette ressource par unité de temps.

La bande passante associée aux ressources esclaves limite les performances d'une plateforme matérielle.

Le problème d'accès conflictuel à des ressources partagées est proportionnel au ratio bande passante du périphérique et nombre d'unités de traitement maitres multiplié par leur fréquence de fonctionnement.

Il existe dans l'état de la technique des mécanismes de limitation d'accès aux ressources partagées par l'intermédiaire de jetons (ou « token bucket » en anglais). Cette technique impose une surveillance active des échanges, et donc induit une complexité de mise en oeuvre.

Il existe donc un besoin de permettre des accès à des ressources partagées sur une plateforme matérielle multi-maîtres en assurant la sûreté de fonctionnement.

A cet effet, l'invention propose un système d'accès à une ressource partagée appartenant à une plateforme matérielle comprenant une pluralité d'unités de traitement maîtres, chaque unité de traitement maître étant apte à exploiter une ressource partagée lors d'une exécution d'un processus, ladite exploitation comprenant une pluralité de transferts des données entre l'unité de traitement maître et la ressource partagée, chaque ressource partagée ayant une bande passante maximale associée. Ce système comporte, pour au moins une dite ressource partagée :
- pour chaque unité de traitement maître, un compteur d'un nombre de transferts de données entre ladite unité de traitement maître et ladite ressource partagée, et un comparateur adapté à comparer le nombre de transferts à une limite de bande passante associée à ladite ressource partagée, ladite limite de bande passante étant une fraction de ladite bande passante maximale,
- une unité de cadencement adaptée à remettre à zéro chaque compteur de nombre de transferts après écoulement d'une période temporelle de durée prédéterminée, ledit système d'accès étant adapté à commander, dès que ledit nombre de transferts associé à une unité de traitement maître atteint ladite limite de bande passante, une suspension de l'exploitation de ladite ressource partagée par ladite unité de traitement maître, et une reprise de l'exploitation de ladite ressource partagée par ladite unité de traitement maître dès la remise à zéro de chaque compteur.

Avantageusement, le système d'accès de l'invention permet de garantir un accès partagé à une ressource par toutes les unités de traitement maîtres de la plateforme, et par conséquent de garantir l'exécution d'un processus en un temps donné, fonction d'un nombre de périodes temporelles prédéterminées.

Le système d'accès à une ressource partagée selon l'invention peut également présenter une ou plusieurs des caractéristiques ci-dessous, prises indépendamment ou selon toutes les combinaisons techniquement envisageables.

Le système comprend, pour chaque unité de traitement maître, un bloc de commande adapté à commander la suspension ou la reprise de l'exploitation de ladite ressource partagée.

Au moins une partie desdits compteurs, desdits comparateurs, desdits blocs de commande et/ou ladite unité de cadencement, sont mis en oeuvre par une unité de traitement dédiée de ladite plateforme.

Au moins une partie desdits compteurs, desdits comparateurs, desdits blocs de commande et/ou ladite unité de cadencement sont mis en oeuvre par un ou plusieurs mécanismes matériels dédiés intégrés à la plateforme matérielle.

Selon un autre aspect, l'invention concerne un procédé d'accès à une ressource partagée appartenant à une plateforme matérielle comprenant une pluralité d'unités de traitement maîtres, chaque unité de traitement maître étant apte à exploiter une ressource partagée lors d'une exécution d'un processus, ladite exploitation comprenant une pluralité de transferts des données entre l'unité de traitement maître et la ressource partagée, chaque ressource partagée ayant une bande passante maximale associée. Le procédé comporte, pour au moins une dite ressource partagée :
- pour chaque unité de traitement maître, une mise en oeuvre d'un compteur d'un nombre de transferts de données entre ladite unité de traitement maître et ladite ressource partagée, et une comparaison du nombre de transferts à une limite de bande passante associée à ladite ressource partagée, ladite limite de bande passante étant une fraction de ladite bande passante maximale,
- une remise à zéro de chaque compteur de nombre de transferts après écoulement d'une période temporelle de durée prédéterminée,
- dès que ledit nombre de transferts associé à une unité de traitement maître atteint ladite limite de bande passante, une commande de suspension de l'exploitation de ladite ressource partagée par ladite unité de traitement maître, et une reprise de l'exploitation de ladite ressource partagée par ladite unité de traitement maître dès la remise à zéro de chaque compteur.

Le procédé d'accès à une ressource partagée selon l'invention peut également présenter une ou plusieurs des caractéristiques ci-dessous, prises indépendamment ou selon toutes les combinaisons techniquement envisageables.

Le procédé comporte une étape préalable d'attribution à chaque unité de traitement maître d'une limite de bande passante associée à ladite ressource partagée.

Lorsque la plateforme matérielle comporte n unités de traitement maîtres, n étant un entier supérieur ou égal à 2, et chaque limite de bande passante est égale à la bande passante maximale associée à ladite ressource partagée divisée par n.

Chaque limite de bande passante est calculée, pour chaque unité de traitement maître, en fonction d'au moins une capacité calculatoire de ladite unité de traitement maître et de la bande passante maximale associée à la ressource partagée.

L'attribution de limite de bande passante comporte, pour une ressource partagée, une attribution de limite de bande passante inférieure et de limite de bande passante supérieure à chaque unité de traitement maître, une attribution d'une première limite de bande passante comprise entre la limite de bande passante inférieure et la limite de bande passante supérieure, et une ré-attribution dynamique d'une deuxième limite de bande passante supérieure à la première limite de bande passante et inférieure à la limite de bande passante supérieure en fonction d'un nombre de dépassements de la première limite de bande passante sur des périodes temporelles successives.

Le procédé comporte plusieurs ré-attributions d'une deuxième limite de bande passante, jusqu'à ce que la deuxième limite de bande passante soit égale à la limite de bande passante supérieure.

D'autres caractéristiques et avantages de l'invention ressortiront de la description qui en est donnée ci-dessous, à titre indicatif et nullement limitatif, en référence aux figures annexées, parmi lesquelles :
- la figure 1 est synoptique des blocs fonctionnels d'un système d'accès à une ressource partagée dans un mode de réalisation ;
- la figure 2 est un graphe schématique représentant la limite d'utilisation d'une ressource partagée par une unité de traitement maître pour une succession de périodes temporelles ;
- la figure 3 est un synoptique des principales étapes d'un procédé d'accès à une ressource partagée dans un mode de réalisation de l'invention.

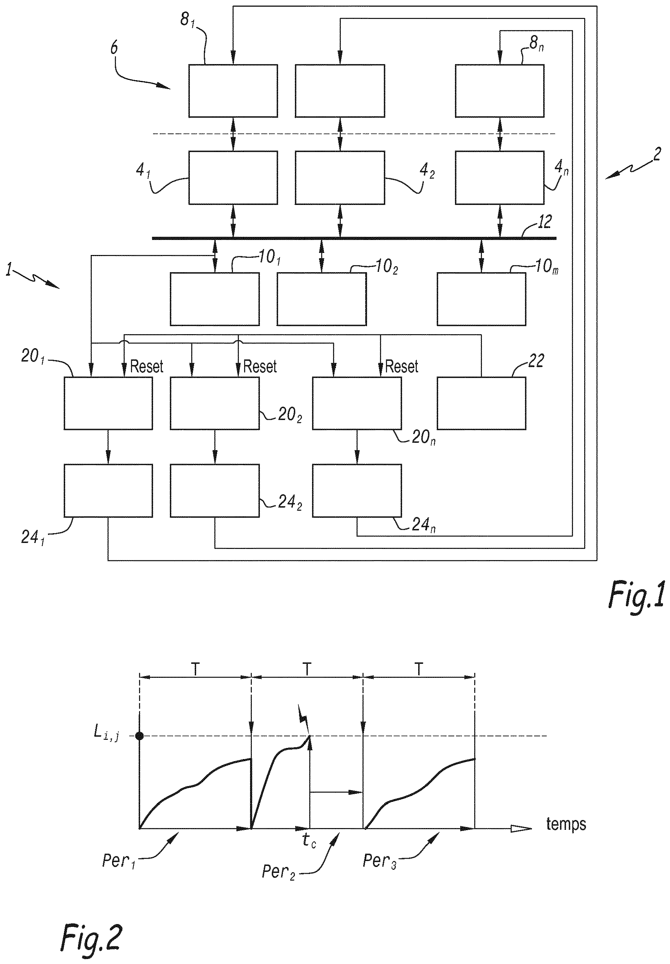

La figure 1 représente schématiquement des blocs fonctionnels d'un système d'accès 1 à des ressources partagées d'une plateforme matérielle 2, selon un mode de réalisation de l'invention.

La plateforme matérielle 2 est décrite ici de manière générique, mais trouve de nombreuses applications. Par exemple, dans le domaine de l'avionique où les besoins de déterminisme sont importants. D'autres domaines, comme la finance, les serveurs liés à sécurité, l'automobile (conduite autonome) sont également des domaines d'application.

La plateforme matérielle 2 représentée à la figure 1 comporte une pluralité d'unités de traitement maîtres 4₁ à 4ₙ.

Comme indiqué dans l'introduction, une unité de traitement maître est une unité capable d'exploiter une ressource dite esclave, par exemple de transférer des données binaires et/ou d'interroger une ressource esclave. Une unité de traitement maître est par exemple : une unité coeur d'un processeur de calcul (ou CPU pour « central processing unit »), ou une unité coeur d'un processeur graphique (ou GPU pour « graphies processing unit ») ou une mémoire à accès direct ou DMA (pour « direct memory access »).

Dans un exemple de mise en oeuvre, la plateforme matérielle 2 est un processeur de calcul multi-coeurs (ou « multi-core » en anglais), et chaque unité de traitement maître est un coeur du processeur de calcul multi-coeurs. Le nombre n d'unités de traitement maîtres est un nombre entier naturel supérieur ou égal à deux. Par exemple, lorsque la plateforme matérielle 2 est un processeur à quatre coeurs, n=4.

Les unités de traitement maîtres 4₁ à 4ₙ sont des unités matérielles (ou « hardware » en anglais), adaptées à exécuter des processus sous contrôle par de commandes ou instructions de bas niveau prioritaires provenant d'un système d'exploitation 6. Il s'agit par exemple d'instructions en langage d'assemblage.

Des blocs fonctionnels 8₁ à 8ₙ d'un système d'accès 1 à des ressources partagées mettent en oeuvre les instructions en langage d'assemblage adaptées à commander une suspension ou une reprise de l'exploitation d'une ressource partagée par une des unités de traitement maîtres, comme décrit en détail ci-après.

Les unités de traitement maîtres 4₁ à 4ₙ sont adaptées à transférer des données ou à transmettre des instructions aux ressources partagées 10₁ à 10ₘ, qui sont des ressources esclaves. Le nombre m de ressources esclaves est un entier positif.

On référencera par 4ᵢ une unité de traitement maître quelconque parmi les unités 4₁ à 4ₙ, et par 10ⱼ une ressource esclave quelconque parmi les ressources 10₁ à 10ₘ.

Des ressources esclaves sont des ressources qui reçoivent des instructions de la part des unités de traitement maîtres et les exécutent.

Par exemple, une des ressources esclaves partagées référencée 10₁ est une mémoire vive ou RAM, qui est un dispositif électronique adapté à stocker des données binaires.

Par exemple, il s'agit d'une mémoire de type DDR3 SDRAM (pour *Double Data Rate 3rd generation Synchronous Dynamic Random Access Memory)* ou DDR4 SDRAM (pour *Double Data Rate 4th generation Synchronous Dynamic Random Access Memory),* qui sont normalisées par le JEDEC (« Joint Electron Device Engineering Council »).

Une unité de traitement maître 4ᵢ est adaptée à exploiter la mémoire vive 10₁, en commandant des transferts de données, en écriture ou en lecture, par l'intermédiaire du bus de communication principal 12.

Chaque ressource 10ⱼ de la plateforme matérielle 2, adaptée à être utilisée par chacune des unités de traitement maîtres 4₁ à 4ₙ, a une bande passante maximale Bⱼ associée, exprimée en quantité de données, par exemple nombre d'octets, par unité de temps, par exemple par seconde.

La bande passante exprime la quantité de données qui peut être transférée à la ressource partagée via les bus de communication et traitée par unité de temps.

Par exemple, pour une mémoire vive 10₁, cette ressource est adaptée à effectuer un nombre Tr de transferts par cycle de mémoire, et un nombre N de cycles de mémoire par seconde. La ressource 10₁ est donc adaptée à effectuer NxTr transferts par seconde. Cette ressource mémoire étant accessible par un bus de communication de largeur de bande L en octets, la bande passante de la ressource mémoire est de LxNxTr octets par seconde.

La bande passante associée à la ressource mémoire est proportionnelle au nombre de transferts, la largeur de bande L étant constante.

Selon une variante, on exprime la bande passante associée à une ressource mémoire en nombre de transferts par unité de temps.

Dans un mode de réalisation de l'invention, le système d'accès 1 à des ressources partagées comporte des unités 20₁ à 20ₙ, qui sont des compteurs d'événements transmis par chaque unité de traitement maître 4₁ à 4ₙ à la ressource partagée 10₁.

Par exemple, chaque évènement est un transfert de données dans le cas où la ressource partagée est une mémoire vive. D'un point de vue plus général, un évènement est une donnée écrite ou lue entre une unité de traitement maitre et une ressource esclave.

De préférence, chaque unité 20₁ à 20ₙ est un compteur d'événements natif intégré à la plateforme, par exemple pour contrôler le fonctionnement de chaque coeur d'un processeur multi-coeurs.

De plus, le système d'accès aux ressources partagées comporte un bloc (ou unité) 22 de cadencement périodique, adapté à envoyer des commandes de remise à zéro de chaque compteur 20₁ à 20ₙ après l'écoulement d'une période temporelle de durée T prédéterminée, par exemple fixée à 10ms. Bien entendu, il s'agit d'un exemple de durée non limitatif. Le bloc de cadencement 22 est également connecté aux blocs fonctionnels 8₁ à 8ₙ, de manière à indiquer à ces blocs le cadencement des périodes temporelles.

Le système d'accès 1 à une ressource partagée comporte également des unités 24₁ à 24ₙ, qui sont des comparateurs, chaque unité 24ᵢ recevant une valeur de compteur de l'unité 20ᵢ correspondant à l'unité de traitement 4ᵢ, et étant adaptée à la comparer à une valeur limite de bande passante L_{i,1} associée à l'unité de traitement 4ᵢ pour l'exploitation de la ressource 10₁ par période temporelle. Chaque unité 24ᵢ est connectée à un bloc fonctionnel 8ᵢ, adapté à commander une unité de traitement 4ᵢ associée.

A réception d'une information relative à l'atteinte de la valeur limite de bande passante pour la période temporelle courante en provenance de l'unité 24ᵢ, le bloc fonctionnel 8ᵢ commande une suspension de l'exploitation de la ressource partagée considérée par l'unité de traitement maître 4ᵢ, qui est la ressource 10₁ dans cet exemple. La suspension de l'exploitation comprend l'arrêt des transferts de données vers la mémoire 10₁, et une sauvegarde du contexte d'exécution du coeur de traitement 4ᵢ.

Après écoulement de la durée T correspondant à la période temporelle, le bloc fonctionnel 8ᵢ commande la reprise de l'exploitation de la ressource 10₁, et donc la reprise de l'exécution du processus à exécuter par le coeur de traitement 4ᵢ.

Chaque bloc fonctionnel 8ᵢ est par exemple implémenté par des instructions de prioritaires de bas niveau du système d'exploitation.

Dans un mode de réalisation, les unités 20₁ à 20ₙ, 24₁ à 24ₙ, le bloc 22 de cadencement périodique et les blocs fonctionnels 8₁ à 8ₙ sont mis en oeuvre par un autre coeur de traitement de la plateforme 2, distinct des unités de traitement 4₁ à 4ₙ. Par exemple, il s'agit d'un coeur de traitement secondaire du processeur multi-coeurs, dédié à la mise en oeuvre d'un système d'accès à une ressource partagée.

Selon une variante, les unités 20₁ à 20ₙ, 24₁ à 24ₙ, le bloc 22 de cadencement périodique et les blocs fonctionnels 8₁ à 8ₙ sont réalisées par des mécanismes matériels dédiés, intégrés à la plateforme, et la suspension est effectuée directement par l'unité de traitement 4ᵢ correspondante.

Selon une autre variante, une partie des unités mentionnée ci-dessus est réalisée par des mécanismes matériels dédiés, et une autre partie par une unité de traitement dédiée.

La figure 1 illustre l'exploitation de la ressource partagée 10₁, mais un fonctionnement analogue peut être prévu pour l'exploitation de chacune des ressources partagées de la plateforme, ou au moins pour une partie d'entre elles.

La figure 2 illustre schématiquement le fonctionnement d'une unité de traitement 4ᵢ utilisant une ressource 10ⱼ sur trois périodes temporelles successives notées Per₁, Per2 et Per3, de durée T prédéterminée.

Par exemple, la période T est fixée à 10ms.

La figure 2 illustre un graphe de la quantité de données transférées, obtenue à partir du compteur du nombre de transferts, à une ressource esclave, par périodes temporelles successives, en fonction d'un axe temporel en abscisse. La valeur limite de bande passante L_{i,j} est indiquée par un trait horizontal.

Pendant la première période Per₁, le compteur du nombre de transferts de données reste inférieur à la valeur limite de bande passante L_{i,j}. Ce compteur est mis à zéro en fin de première période.

Pendant la deuxième période Per₂, à un instant temporel t_{c}, la valeur limite de bande passante L_{i,j} associée à l'unité de traitement maître 4ᵢ et à la ressource 10ⱼ est atteinte. Le processus en cours d'exécution est alors bloqué, et par conséquent l'exploitation de la ressource est suspendue, et ce jusqu'à la fin de la période Per2 de durée T. Ce compteur est mis à zéro en fin de deuxième période, et l'exploitation de la ressource est reprise à la période suivante.

Pendant la troisième période temporelle Per₃, le compteur du nombre de transferts de données reste inférieur à la valeur limite de bande passante L_{i,j}.

La figure 2 est une illustration pour une des unités de traitement maîtres, mais elle est représentative de l'exploitation de la ressource partagée par chaque unité de traitement maître dans le système d'accès 1 à des ressources partagées.

On comprend que la mise en oeuvre de l'invention empêche une sur-exploitation ponctuelle d'une ressource par chacune des unités de traitement maîtres, et donc empêche un engorgement de la bande passante associée à la ressource exploitée.

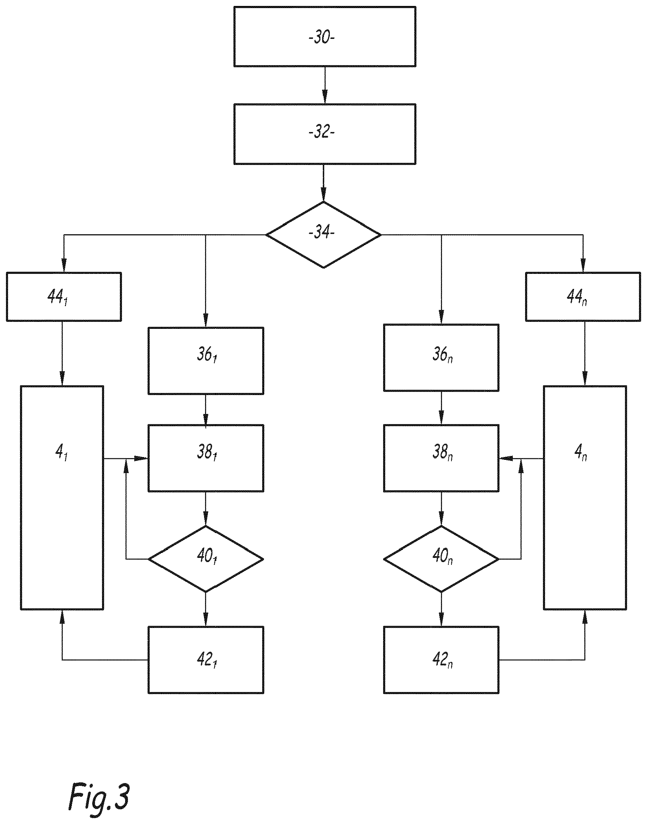

La figure 3 est un synoptique des principales étapes d'un procédé d'accès à une ressource partagée dans un premier mode de réalisation de l'invention, dit statique.

Ce procédé est décrit pour l'accès à une ressource partagée 10ⱼ par une pluralité d'unités de traitement maîtres 4₁,.., 4ᵢ,..,4ₙ.

Afin de simplifier la représentation, les étapes associées aux unités de traitement maîtres 4₁ et 4ₙ sont représentées, mais il est entendu que ces étapes sont mises en oeuvre de manière analogue pour chaque unité de traitement maître 4ᵢ.

Le procédé comprend une première étape 30 d'attribution à chaque unité de traitement maître 4ᵢ une limite de bande passante L_{i,j} associée à l'accès à la ressource partage 10ⱼ.

Dans ce mode de réalisation, les limites de bande passante L_{i,j} sont fixées au préalable de manière statique, en fonction de la bande passante maximale Bⱼ de la ressource 10ⱼ dans la plateforme matérielle 2. Par exemple, la bande passante est exprimée en nombre de transferts par unité de temps, qui est proportionnel à a la quantité de données échangées par unité de temps.

Par exemple, dans un mode de réalisation, les limites de bande passante L_{i,j} sont égales à une fraction de Bⱼ : L_{i,j}=Bⱼ/n.

Selon une variante, les limites de bande passante sont choisies spécifiquement pour chaque unité de traitement 4ᵢ, en fonction des capacités de traitement de chaque unité 4ᵢ. La somme des limites de bande passante L_{i,j} reste néanmoins inférieure ou égale à la bande passante maximale Bⱼ de la ressource 10ⱼ.

Les limites de bande passante L_{i,j} sont préalablement déterminées de manière à les utiliser dans les comparateurs 24ᵢ.

La durée T de la période temporelle est également prédéterminée, et mémorisée dans l'unité de cadencement 22, qui met en oeuvre un cadencement temporel 32.

Au début d'une nouvelle période temporelle de durée T (étape 34), pour chaque unité de traitement 4ᵢ, une valeur de compteur Cᵢ de données transférées est initialisée à 0, aux étapes de ré-initialisation 36₁,..., 36ₙ des valeurs des compteurs.

Ensuite, les valeurs de compteur Cᵢ sont augmentées à l'étape 38ᵢ (étapes 38₁ et 38ₙ illustrées à la figure 3) en fonction des transferts de données de l'unité de traitement maître 4ᵢ associée, et les valeurs de compteur Cᵢ sont comparées en continu à l'étape de comparaison 40ᵢ (étapes 40₁ et 40ₙ illustrées) à la valeur limite de bande passante L_{i,j} préalablement attribuée.

En cas de non-atteinte de la valeur limite, le décompte de données transférées continue.

En cas d'atteinte de la valeur limite de bande passante L_{i,j} lors de la comparaison 40ᵢ, une commande de suspension d'exécution 42ᵢ (étapes 42₁ et 42ₙ illustrées) est transmise à l'unité de traitement 4ᵢ.

Après écoulement d'une période temporelle de durée T, une commande 44ᵢ (étapes 44₁ et 44ₙ illustrées) de reprise d'exécution est transmise à l'unité de traitement 4ᵢ. La reprise d'exécution est effectuée dès écoulement de la durée T, et sensiblement en parallèle de la remise à zéro des valeurs des compteurs Cᵢ (étapes 36₁ à 36ₙ).

Selon un deuxième mode de réalisation de l'invention, les valeurs limite de bande passante sont attribuées de manière dynamique.

Dans ce deuxième mode de réalisation, on attribue à chaque unité de traitement maître 4ᵢ, pour l'exploitation d'une ressource donnée, une limite de bande passante inférieure L_{i,j,inf} et une limite de bande passante supérieure L_{i,j,sup}.

Les limites de bande passante sont choisies de manière à ce que la somme des limites de bande passante supérieure pour toutes les unités de traitement maîtres soit inférieure ou égale à la bande passante maximale Bⱼ associée à la ressource 10ⱼ.

Lors d'un démarrage de l'exploitation de la ressource partagée, une première limite de bande passante attribuée au fonctionnement de l'unité maître est la limite de bande passante inférieure L_{i,j,inf}.

Si cette première limite est dépassée pour plusieurs périodes temporelles consécutives, une deuxième limite de bande passante, augmentée par rapport à la première limite de bande passante, est attribuée à l'unité de traitement maître 4ᵢ, tout en restant inférieure ou égale à la limite de bande passante supérieure L_{i,j,sup}.

Dans ce deuxième mode de réalisation, un deuxième compteur de nombre de dépassements successifs d'une première limite de bande passante est mis en place. Le nombre de périodes de dépassement consécutif déclenchant une augmentation de la limite de bande passante attribuée est un paramètre choisi, par exemple il est égal à 10.

Dans un mode de réalisation, plusieurs augmentations successives sont mises en oeuvre jusqu'à atteindre la limite de bande passante supérieure. Par exemple, l'augmentation est effectuée de manière progressive, par incréments, sur une pluralité de périodes temporelles successives, en fonction du nombre de dépassements, afin d'éviter une forte augmentation de limite de bande passante associée à une même unité de traitement maître sur une seule période temporelle. En particulier, si la deuxième limite de bande passante visée est la limite de bande passante supérieure L_{i,j,sup}, l'augmentation de bande passante est effectuée sur plusieurs périodes temporelles.

Avantageusement, cela permet un lissage de l'augmentation dynamique de la bande passante. De plus, cela permet d'éviter tout engorgement de l'exploitation d'une ressource partagée dû à l'augmentation soudaine de la bande passante utilisée par une ou plusieurs des unités de traitement maîtres.

Avantageusement, dans tous les modes de réalisation, l'invention permet de garantir l'accès à des ressources partagées par plusieurs unités de traitement maîtres sans engorgement, et tout en garantissant un temps d'exécution d'un processus donné.

## Revendications

1. Système d'accès à une ressource partagée appartenant à une plateforme matérielle (2) comprenant une pluralité d'unités de traitement maîtres (4₁, 4₂,..., 4ₙ), chaque unité de traitement maître (4₁, 4₂,..., 4ₙ) étant apte à exploiter une ressource partagée (10₁,10₂,...,10ₘ) lors d'une exécution d'un processus, ladite exploitation comprenant une pluralité de transferts des données entre l'unité de traitement maître (4₁, 4₂,..., 4ₙ) et la ressource partagée (10₁, 10₂,...,10ₘ), chaque ressource partagée ayant une bande passante maximale associée, **caractérisé en ce qu'**il comporte, pour au moins une dite ressource (10₁) partagée :
- pour chaque unité de traitement maître (4₁, 4₂,..., 4ₙ), un compteur (20₁, 20₂,..., 20ₙ) d'un nombre de transferts de données entre ladite unité de traitement maître (4₁, 4₂,..., 4ₙ) et ladite ressource partagée (10₁), et un comparateur (24₁, 24₂,..., 24ₙ) adapté à comparer le nombre de transferts à une limite de bande passante associée à ladite ressource partagée, ladite limite de bande passante étant une fraction de ladite bande passante maximale,
- une unité de cadencement (22) adaptée à remettre à zéro chaque compteur (20₁, 20₂,..., 20ₙ) de nombre de transferts après écoulement d'une période temporelle de durée prédéterminée,
ledit système d'accès (1) étant adapté à commander, dès que ledit nombre de transferts associé à une unité de traitement maître atteint ladite limite de bande passante, une suspension de l'exploitation de ladite ressource partagée (10₁) par ladite unité de traitement maître, et une reprise de l'exploitation de ladite ressource partagée par ladite unité de traitement maître dès la remise à zéro de chaque compteur.

2. Système selon la revendication 1, comprenant, pour chaque unité de traitement maître (4₁,4₂,...,4ₙ), un bloc de commande (8₁,...,8ₙ) adapté à commander la suspension ou la reprise de l'exploitation de ladite ressource partagée (10₁).

3. Système selon la revendication 2, dans lequel au moins une partie desdits compteurs (20₁, 20₂,..., 20ₙ), desdits comparateurs (24₁, 24₂,..., 24ₙ), desdits blocs de commande (8₁,...,8ₙ) et/ou ladite unité de cadencement (22), sont mis en oeuvre par une unité de traitement dédiée de ladite plateforme matérielle (2).

4. Système selon l'une des revendications 2 ou 3, dans lequel au moins une partie desdits compteurs (20₁,20₂,...,20ₙ), desdits comparateurs (24₁, 24₂,..., 24ₙ), desdits blocs de commande (8₁,..., 8ₙ) et/ou ladite unité de cadencement (22) sont mis en oeuvre par un ou plusieurs mécanismes matériels dédiés intégrés à la plateforme matérielle.

5. Procédé d'accès à une ressource partagée appartenant à une plateforme matérielle comprenant une pluralité d'unités de traitement maîtres, chaque unité de traitement maître étant apte à exploiter une ressource partagée lors d'une exécution d'un processus, ladite exploitation comprenant une pluralité de transferts des données entre l'unité de traitement maître et la ressource partagée, chaque ressource partagée ayant une bande passante maximale associée, **caractérisé en ce qu'**il comporte, pour au moins une dite ressource partagée :
- pour chaque unité de traitement maître, une mise en oeuvre d'un compteur (38₁,..., 38ₙ) d'un nombre de transferts de données entre ladite unité de traitement maître et ladite ressource partagée, et une comparaison (40₁,.., 40ₙ) du nombre de transferts à une limite de bande passante associée à ladite ressource partagée, ladite limite de bande passante étant une fraction de ladite bande passante maximale,
- une remise à zéro (36₁, ..., 36ₙ) de chaque compteur de nombre de transferts après écoulement d'une période temporelle de durée prédéterminée,
- dès que ledit nombre de transferts associé à une unité de traitement maître atteint ladite limite de bande passante, une commande de suspension (42₁, ..., 42ₙ) de l'exploitation de ladite ressource partagée par ladite unité de traitement maître, et une reprise (44₁, ..., 44ₙ) de l'exploitation de ladite ressource partagée par ladite unité de traitement maître dès la remise à zéro de chaque compteur.

6. Procédé selon la revendication 5, comportant une étape préalable d'attribution (30) à chaque unité de traitement maître d'une limite de bande passante associée à ladite ressource partagée.

7. Procédé selon la revendication 6, dans lequel la plateforme matérielle (2) comporte n unités de traitement maîtres, n étant un entier supérieur ou égal à 2, et dans lequel chaque limite de bande passante est égale à la bande passante maximale associée à ladite ressource partagée divisée par n.

8. Procédé selon la revendication 6, dans lequel chaque limite de bande passante est calculée, pour chaque unité de traitement maître, en fonction d'au moins une capacité calculatoire de ladite unité de traitement maître et de la bande passante maximale associée à la ressource partagée.

9. Procédé selon la revendication 6, dans lequel ladite attribution de limite de bande passante comporte, pour une ressource partagée, une attribution de limite de bande passante inférieure et de limite de bande passante supérieure à chaque unité de traitement maître, une attribution d'une première limite de bande passante comprise entre la limite de bande passante inférieure et la limite de bande passante supérieure, et une ré-attribution dynamique d'une deuxième limite de bande passante supérieure à la première limite de bande passante et inférieure à la limite de bande passante supérieure en fonction d'un nombre de dépassements de la première limite de bande passante sur des périodes temporelles successives.

10. Procédé selon la revendication 9, comportant plusieurs ré-attributions d'une deuxième limite de bande passante, jusqu'à ce que la deuxième limite de bande passante soit égale à la limite de bande passante supérieure.
